(19) Europäisches Patentamt
European Patent Office
Office européen des brevets

(11) EP 3 200 592 B1

(12) EUROPEAN PATENT SPECIFICATION

(45) Date of publication and mention of the grant of the patent:
**30.09.2020 Bulletin 2020/40**

(21) Application number: **15771963.4**

(22) Date of filing: **01.10.2015**

(51) Int Cl.:
***A21D 2/26** (2006.01)* ***A21D 6/00** (2006.01)*
***A21D 8/04** (2006.01)* ***A23L 7/104** (2016.01)*

(86) International application number:
**PCT/EP2015/072676**

(87) International publication number:
**WO 2016/050905 (07.04.2016 Gazette 2016/14)**

# (54) METHOD FOR PREPARING A DOUGH COMPRISING ADDITION OF PENICILLIUM GLUCOSE OXIDASE

VERFAHREN ZUR HERSTELLUNG EINES TEIGS UNTER VERWENDUNG VON PENICILLIUM GLUKOSEOXIDASE

PROCÉDÉ DE PRÉPARATION D’UNE PÂTE COMPRENANT L’UTILISATION DE LA GLUCOSE OXYDASE DE PENICILLIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2014 EP 14187539**
**06.10.2014 EP 14187792**

(43) Date of publication of application:
**09.08.2017 Bulletin 2017/32**

(73) Proprietor: **DSM IP Assets B.V.**
**6411 TE Heerlen (NL)**

(72) Inventors:
- **STRUBBE, Lambertus Gerhard**
**NL-6100 AA Echt (NL)**
- **BENSCHOP, VAN, Caroline Hendrine Maria**
**NL-6100 AA Echt (NL)**
- **ONG, Soon Hee**
**NL-6100 AA Echt (NL)**
- **DIAS PERES, José**
**NL-6100 AA Echt (NL)**

(74) Representative: **DSM Intellectual Property**
**P.O. Box 4**
**6100 AA Echt (NL)**

(56) References cited:
**WO-A2-2013/026575** **CN-A- 103 981 159**
**US-A1- 2006 078 650** **US-A1- 2007 014 891**

- **MARÃA EUGENIA STEFFOLANI ET AL: "Use of Enzymes to Minimize Dough Freezing Damage", FOOD AND BIOPROCESS TECHNOLOGY ; AN INTERNATIONAL JOURNAL, SPRINGER-VERLAG, NEW YORK, vol. 5, no. 6, 1 March 2011 (2011-03-01), pages 2242-2255, XP035089292, ISSN: 1935-5149, DOI: 10.1007/S11947-011-0538-2**
- **ZHAOWEI GAO ET AL: "High-level expression of theglucose oxidase gene inusing codon optimization", BIOTECHNOLOGY LETTERS, SPRINGER NETHERLANDS, DORDRECHT, vol. 34, no. 3, 4 November 2011 (2011-11-04), pages 507-514, XP035011913, ISSN: 1573-6776, DOI: 10.1007/S10529-011-0790-6**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 200 592 B1

SEQUENCE LISTING

<110> DSM IP Assets B.V.

<120> Method for preparing a dough

<130> 30266-WO-PCT

<160> 2

<170> PatentIn version 3.5

<210> 1
<211> 604
<212> PRT
<213> penicillium chrysogenum

<220>
<221> SIGNAL
<222> (1)..(18)

<400> 1

```
Met Lys Ser Thr Ile Ile Thr Ser Ile Leu Phe Ser Val Ala Ala Val
1               5                   10                  15

Gln Ala Tyr Ser Pro Ala Glu Gln Ile Asp Val Gln Ser His Leu Leu
            20                  25                  30

Ser Asp Pro Thr Lys Val Glu Gly Glu Thr Tyr Asp Tyr Val Ile Ala
        35                  40                  45

Gly Gly Gly Leu Thr Gly Leu Thr Val Ala Ala Lys Leu Ser Glu Asn
    50                  55                  60

Pro Lys Ile Lys Val Leu Val Ile Glu Lys Gly Phe Tyr Glu Ser Asn
65                  70                  75                  80

Asp Gly Pro Ile Ile Glu Asp Pro Asn Ala Tyr Gly Glu Ile Phe Gly
                85                  90                  95

Thr Ser Val Asp Gln Asn Tyr Leu Thr Val Pro Leu Ile Asn Asn Arg
            100                 105                 110

Thr Gly Glu Ile Lys Ser Gly Leu Gly Leu Gly Gly Ser Thr Leu Ile
        115                 120                 125

Asn Gly Asp Ser Trp Thr Arg Pro Asp Lys Val Gln Ile Asp Ser Trp
    130                 135                 140

Glu Lys Val Phe Gly Met Glu Gly Trp Asn Trp Asp Asn Val Phe Gln
145                 150                 155                 160
```

```
Tyr Met Gln Lys Ala Glu Arg Ser Arg Pro Pro Thr Ala Ala Gln Ile
                165                 170                 175

Glu Ala Gly His Phe Tyr Asp Pro Ala Cys His Gly Thr Asp Gly Thr
            180                 185                 190

Val His Ala Gly Pro Arg Asp Asn Gly Lys Pro Trp Ser Pro Leu Met
        195                 200                 205

Arg Ala Leu Met Asn Thr Val Ser Ala Phe Gly Val Pro Val Gln Lys
    210                 215                 220

Asp Phe His Cys Gly His Pro Arg Gly Val Ser Met Ile Pro Asn Asn
225                 230                 235                 240

Leu His Glu Asn Gln Ile Arg Ala Asp Ala Ala Arg Glu Trp Leu Leu
                245                 250                 255

Pro Asn Tyr Gln Arg Asp Asn Leu Gln Ile Leu Thr Gly Gln Lys Val
            260                 265                 270

Gly Lys Val Leu Phe Asn Gln Thr Ala Ser Gly Pro Lys Ala Val Gly
        275                 280                 285

Val Asn Phe Gly Thr Asn Lys Ala Val Asn Phe Asn Val Tyr Ala Lys
    290                 295                 300

Gln Glu Val Leu Leu Ala Ala Gly Ser Ala Ile Ser Pro Leu Ile Leu
305                 310                 315                 320

Glu Tyr Ser Gly Ile Gly Ile Lys Ser Val Leu Asp Lys Ala Gly Val
                325                 330                 335

Lys Gln Leu Leu Glu Leu Pro Val Gly Leu Asn Met Gln Asp Gln Thr
            340                 345                 350

Thr Thr Thr Val Arg Ser Arg Ala Asn Asn Ala Pro Gly Gln Gly Gln
        355                 360                 365

Ala Ala Tyr Phe Ala Asn Phe Thr Glu Val Leu Gly Asp His Ala Ala
    370                 375                 380

Gln Gly Ile Lys Leu Leu Asp Thr Lys Leu Asp Gln Trp Ala Glu Glu
385                 390                 395                 400

Thr Val Ala Arg Gly Gly Phe His Asn Val Thr Ala Leu Lys Ile Gln
                405                 410                 415
```

```
Tyr Glu Asn Tyr Arg Asn Trp Leu Leu Asp Glu Asp Val Ala Phe Ala
            420                 425                 430

Glu Leu Phe Phe Asp Thr Glu Gly Lys Ile Asn Phe Asp Ile Trp Asn
        435                 440                 445

Leu Ile Pro Phe Thr Arg Gly Ser Val His Ile Leu Ser Ser Asp Pro
    450                 455                 460

Tyr Leu Trp Gln Tyr Ala Asn Asp Pro Lys Phe Phe Met Asn Glu Leu
465                 470                 475                 480

Asp Leu Leu Gly Gln Ala Ala Ala Thr Lys Leu Gly Arg Glu Leu Ser
                485                 490                 495

Ser Ala Gly Glu Met Lys Lys Tyr Tyr Ala Gly Glu Thr Ile Pro Gly
            500                 505                 510

Asp Asn Leu Pro Gln Asp Ala Thr Val Glu Gln Trp Glu Asp Tyr Val
        515                 520                 525

Met Met Asn Phe Arg Pro Asn Trp His Ala Val Ser Thr Cys Ser Met
    530                 535                 540

Met Ser Arg Glu Leu Gly Gly Val Val Asp Ala Thr Ala Lys Val Tyr
545                 550                 555                 560

Gly Thr Gln Gly Leu Arg Val Ile Asp Gly Ser Ile Pro Pro Thr Gln
                565                 570                 575

Val Ser Ser His Val Met Thr Val Phe Tyr Gly Met Ala Leu Arg Ile
            580                 585                 590

Ala Glu Ser Val Leu Glu Asp Tyr Ala Lys Lys Ala
        595                 600
```

<210> 2
<211> 1816
<212> DNA
<213> penicillium chrysogenum

<220>
<221> signal
<222> (1)..(54)

<220>
<221> terminator
<222> (1813)..(1816)

<400> 2

```
atgaagtcca ctattatcac ctccattctc ttctctgtgg ctgccgtcca ggcctatagc      60
ccggccgagc agatcgacgt ccagtctcac ctgctttctg accccaccaa ggtcgaggga     120
gagacttacg actatgtcat tgctggtggt ggtttgactg gtctgaccgt ggctgccaag     180
ctgtctgaaa acccgaagat caaagtcctt gtgattgaga agggattcta cgaatccaac     240
gatggaccga tcatcgagga ccccaacgcc tatggggaga tctttggaac tagtgtggat     300
cagaattatc tcacagttcc cctcatcaac aaccgaactg ggaaattaa gtctggcctc      360
ggtcttggtg gctcgacctt gatcaacggc gattcctgga cccgccccga caaggtccag     420
atcgactcat gggaaaaggt ctttggcatg gagggctgga actgggacaa tgtcttccag     480
tacatgcaga aagctgagcg ctcgcgcccc ccgactgccg cccagattga agccggtcac     540
ttctacgacc ctgcctgtca tggaacagac ggaaccgttc atgccggccc tcgcgacaac     600
ggcaagcctt ggtccccact gatgcgagcc ctcatgaaca ccgtctccgc tttcggtgtc     660
cccgtccaga aggacttcca ctgcggtcac cccgtggtg tctcgatgat cccgaacaac      720
ctccatgaga accagatccg ggctgatgcc gctcgcgaat ggcttcttcc caactaccag     780
cgcgataacc tgcagatcct gactggccag aaggtcggaa aggttttgtt caaccagacc     840
gcatctggac ctaaggctgt tggtgtgaac ttcggtacca acaaggctgt taacttcaat     900
gtctacgcca agcaagaagt tctgttggcc gccggatctg ccatttctcc tttgatcctt     960
gaatactccg gtattggtat caagtccgtc cttgacaagg ccggtgttaa gcagctcctc    1020
gaactccctg ttggtctcaa catgcaagac cagaccacta ccactgttcg gtcccgcgcc    1080
aacaacgcac ctggacaagg ccaggccgct tactttgcca acttcaccga ggttctcggc    1140
gaccacgccg cccagggtat taagttgctg gacaccaagc ttgaccagtg ggccgaggag    1200
accgttgccc gcggtggctt ccacaatgtg actgccctca agatccagta tgagaactac    1260
cgtaactggc tccttgatga ggacgttgca tttgccgagc tcttcttcga cactgagggc    1320
aagatcaact ttgatatctg gaatcttatc cccttcactc gcggttccgt ccacatcctc    1380
agcagtgacc cttacctctg gcaatacgca aatgacccca agttcttcat gaacgagctg    1440
gatcttctcg gccaggccgc tgctactaag ctgggtcgtg agctctctag cgctggtgag    1500
atgaagaagt actacgctgg cgagaccatc cccggcgaca acctgcccca ggatgccacc    1560
gtcgagcagt gggaggacta cgtgatgatg aacttccgtc ctaactggca cgctgttagc    1620
acctgctcta tgatgtcccg cgagcttggt ggtgtcgtcg acgctactgc caaggtctac    1680
ggtactcagg gcctccgtgt cattgacgga tctatccctc ccactcaggt gtcctctcac    1740
gttatgaccg ttttctacgg tatggccttg cggatcgccg aatccgtcct tgaagactat    1800
gccaagaaag cttaaa                                                    1816
```

## Description

### Field of the invention

The present invention relates to a method for preparing frozen doughs.

### Background of the invention

In order to separate dough production and baking and sales of bread products it is common to freeze dough pieces after the dough is formed. The dough having a reduced temperature of below 0 °C is referred to herein as "frozen dough". Often the temperature is lowered to about -35°C in a short time period, which is referred to as "shock freezing". After shock-freeing the dough is packed in plastic and stored for several weeks or months during which period distribution to the baking location can take place. Alternatively the temperature of the dough is lowered more gradually to a reduced temperature in the range of -18 to -20 degrees Celsius.

Frozen dough has several advantages for the bakery industry such as a reduction of night labour, better flexibility in production and allowing bakeries to offer a broader assortment of fresh breads.

Frozen dough is subject to stress due to the freezing and frequently shows different behaviour as compared to dough that is kept at a temperature of above 0 °C during the whole bread making process. Frozen dough frequently shows extended fermentation (proofing) times after thawing, loss of product stability and handling tolerance, reduced baked product volume, loss of shape, coarse crumb structure, blister formation, increased and uneven crust browning.

In order to reduce the negative effect of freezing, specially developed and selected ingredients are applied in frozen dough. Especially, in order to optimize gluten strength, increased levels of oxidative ingredients, such as ascorbic acid are used. Also the enzyme glucose oxidase (GOX), such as the commercially available *Aspergillus* glucose oxidase, is commonly used in frozen dough to improve dough strength, to improve product appearance or to stabilize volume and shape.

M. E. Steffolani et al., Food and Bioprocess Technology, Vol.5, No.6, p. 2242-2255; US 2007/014891 and US 2006/078650 all disclose application of *Aspergillus niger* glucose oxidase in the preparation of frozen doughs.

The glucose oxidases which are presently used in frozen dough have some disadvantages, including that they shorten the dough, they result in loss of extensibility and/or they result in elasticity of the dough. The baked products produced from such doughs usually have a coarse crumb structure and frequently off-flavors are experienced in these baked products.

### Summary of the invention

In one aspect the present invention relates to a method for preparing a frozen dough, which method comprises including a *Penicillium* glucose oxidase in the dough during preparation of the dough, wherein the *Penicillium* glucose oxidase has an amino acid sequence having at least 85% identity to amino acids 19 to 604 of SEQ ID NO. 1, and cooling the dough to a temperature in the range of - 35 to -5 degrees Celsius.

In another aspect, the present invention relates to a frozen dough comprising a *Penicillium* glucose oxidase wherein the *Penicillium* glucose oxidase has an amino acid sequence having at least 85% identity to amino acids 19 to 604 of SEQ ID NO. 1.

The disclosure further relates to a method for preparing a baked product, which method comprises baking a frozen dough comprising a *Penicillium* glucose oxidase.

In another aspect, the present invention relates to baked product prepared from a frozen dough comprising a *Penicillium* glucose oxidase wherein the *Penicillium* glucose oxidase has an amino acid sequence having at least 85% identity to amino acids 19 to 604 of SEQ ID NO. 1.

In another aspect, the present invention relates to the use of a *Penicillium* glucose oxidase for preparing a frozen dough wherein the *Penicillium* glucose oxidase has an amino acid sequence having at least 85% identity to amino acids 19 to 604 of SEQ ID NO. 1.

### Description of the sequence listing

SEQ ID No.1 sets out the amino acid sequence of the *Penicillium* glucose oxidase used in the method according to the invention. Amino acids 1 to 18 represent the signal sequence used for secretion of the *Penicillium* glucose oxidase enzyme (amino acids 19 - 604).

SEQ ID No.2 sets out the cDNA sequence encoding the *Penicillium* glucose oxidase depicted in Fig. 1. Nucleotides 1 to 54 encode the signal sequence, nucleotides 55 to 1816 encode the mature glucose oxidase, including a translational termination sequence (5'-TAAA-3') at the 3'-terminus.

## Short description of the figures

Figure 1. Amino acid sequence of the *Penicillium* glucose oxidase used in the method according to the invention. Amino acids 1 to 18 represent the signal sequence used for secretion of the glucose oxidase (amino acids 19 - 604).
Figure 2. cDNA sequence encoding the *Penicillium* glucose oxidase depicted in Fig.1. Nucleotides 1 to 54 encode the signal sequence, nucleotides 55 to 1816 encode the mature glucose oxidase, including a translational termination sequence (5'-TAAA-3') at the 3'-terminus.

## Detailed description of the invention

Throughout the present specification and the accompanying claims, the words "comprise", "include" and "having" and variations such as "comprises", "comprising", "includes" and "including" are to be interpreted inclusively. That is, these words are intended to convey the possible inclusion of other elements or integers not specifically recited, where the context allows.
The articles "a" and "an" are used herein to refer to one or to more than one (i.e. to one or at least one) of the grammatical object of the article. By way of example, "an element" may mean one element or more than one element.
The present disclosure relates to a method for improving a dough which is to be stored frozen, which method comprises including a *Penicilllium* glucose oxidase in the dough during preparation of the dough.
In an embodiment the method according to the invention for preparing a frozen dough comprises:

a) preparing the dough including the step of adding a *Penicillium* glucose oxidase according to claim 1 to at least one dough ingredient; and
b) cooling the dough to a temperature in the range of -35 to -5 degrees Celsius.

The method according to the invention is a method for preparing a frozen dough which method comprises:

a) preparing the dough including the step of adding a *Penicillium* glucose oxidase wherein the *Penicillium* glucose oxidase has an amino acid sequence having at least 85% identity to amino acids 19 to 604 of SEQ ID NO. 1 to at least one dough ingredient; and
b) cooling the dough to a temperature in the range of -35 to -5 degrees Celsius to obtain a frozen dough.

In an embodiment of the invention, a method of the invention is a method to prepare a frozen dough, which method comprises the steps (i) adding a *Penicillium* glucose oxidase wherein the *Penicillium* glucose oxidase has an amino acid sequence having at least 85% identity to amino acids 19 to 604 of SEQ ID NO. 1 to at least one dough ingredient; (ii) preparing the dough; and (iii) cooling the dough to a temperature in the range of -35 to -5 degrees Celsius.
In an aspect of the invention, a method of the invention is a method to prepare a frozen dough, which method comprises the steps (i) adding a *Penicillium* glucose oxidase to at least one dough ingredient; (ii) preparing the dough; and (iii) cooling the dough to a temperature in the range of -35 to -5 degrees Celsius, wherein the *Penicillium* glucose oxidase has an amino acid sequence as set out in amino acids 19 to 604 of SEQ ID NO. 1.
In an aspect of the method according to the invention the *Penicillium* glucose oxidase is added in an amount of 1 to 50 ppm based in weight of flour.
The phrase "incorporating into the dough" or "including in the dough" is defined herein as adding the enzyme according to the invention to the dough, to any ingredient from which the dough is to be made (i.e. to any dough ingredient), and/or to any mixture of dough ingredients from which the dough is to be made. In other words, the enzyme may be added in any step of the dough preparation and may be added in one, two or more steps. The enzyme is added to the ingredients of a dough that is kneaded and baked to make the baked product using methods well known in the art. See, for example, U.S. Patent No. 4,567,046, EP-A-426,211, JP-A-60-78529, JP-A-62-111629, and JP-A-63-258528.
The enzyme is incorporated, included or added in an effective amount. The term "effective amount" is defined herein as an amount of the enzyme that is sufficient for providing a measurable effect on at least one property of interest of the dough and/or baked product.
An effective amount includes a range of 1-50 ppm by weight of flour of a *Penicillium* glucose oxidase having an activity in a range of about 2500-4000, of about 2800-4000, of about 3000-4000 or of about 3000-3600 glucose oxidase units/gram enzyme. In another embodiment, 1 ppm - 30 ppm by weight of flour of a *Penicillium* glucose oxidase having an activity in a range of about 2500-4000, of about 2800-4000, of about 3000-4000 or of about 3000-3600 glucose oxidase units/gram enzyme is applied. In another embodiment, 1 ppm - 20 ppm by weight of flour of a *Penicillium* glucose oxidase having an activity in a range of about 2500-4000, of about 2800-4000, of about 3000-4000 or of about 3000-3600 glucose oxidase units/gram enzyme is applied. Glucose oxidase activity is preferably determined as described herein. *The Penicillium* glucose oxidase has an amino acid sequence having at least 85%, at least 90%, at least 95%, at least 97%, at least 98% or at least 99% identity to amino acids 19-604 of SEQ ID No. 1.

The method according to the invention for preparing a frozen dough results in an improved property of the dough and/or in an improved property of the baked product made from the dough.

Herein the phrase "baked product made from the dough" means a baked product made from the dough that was thawed after it was frozen.

The frozen dough according to the invention comprises a *Penicillium* glucose oxidase having at least 85% identity to amino acids 19 to 604 of SEQ ID NO. 1.

The frozen dough according to the invention has at least one improved property as described herein or results in at least one improved property in a baked product made from the dough.

The use according to the invention as set forth in claim 11 of the *Penicillium* glucose oxidase in the preparation of a frozen dough results in at least one improved property as described herein.

The improved property is a property which is relevant in the preparation of a baked product.

The term "improved property" is defined herein as any property of a dough and/or a product obtained from the dough, particularly a baked product, which is improved by the action of the *Penicillium* glucose oxidase.

The improved property may be determined after thawing the frozen dough according to the invention, i.e. after thawing a frozen dough comprising a *Penicillium* glucose oxidase according to claim 6 or after thawing a frozen dough obtained by any method according to the invention. In an aspect the improved property of the frozen dough is determined after thawing a frozen dough.

The improved property is determined as compared with a reference not comprising the *Penicillium* glucose oxidase. The reference may be a dough without a glucose oxidase (herein referred as Control) or may be a dough comprising a different glucose oxidase such as an *Aspergillus* glucose oxidase. The improved property may be demonstrated by preparing a baked product from a dough comprising a *Penicillium* glucose oxidase, and preparing another baked product from a dough not comprising a *Penicillium* glucose oxidase, determining the property of both products and comparing the results.

The improved property may include any one or more of the following, but is not limited to, increased strength of the dough, increased elasticity of the dough, increased dough stability, reduced stickiness of the dough, improved extensibility of the dough, improved machineability of the dough, increased volume of the baked product, improved flavor of the baked product, improved crumb structure of the baked product, improved crumb softness of the baked product and/or reduced blistering of the baked product.

The improved property may be determined by comparison of a dough and/or a baked product prepared with and without addition of the *Penicillium* glucose oxidase in accordance with the methods of present invention.

A baked product prepared from a frozen dough in which a *Penicillium* glucose oxidase having at least 85% identity to amino acids 19 to 604 of SEQ ID NO. 1 was included during preparation of the dough, has reduced or no off-flavour when compared to a baked product prepared from a frozen dough which does not include a *Penicillium* glucose oxidase having at least 85% identity to amino acids 19 to 604 of SEQ ID NO. 1, in particular compared to a baked product prepared from a frozen dough which comprises an *Aspergillus* glucose oxidase

A dough comprising a *Penicillium* glucose oxidase having at least 85% identity to amino acids 19 to 604 of SEQ ID NO. 1 shows increased dough stability compared to a dough which does not comprise a *Penicillium* glucose oxidase having at least 85% identity to amino acids 19 to 604 of SEQ ID NO. 1.

In the context of the present invention, the term 'dough' is defined as a mixture of flour and other dough ingredients. In one embodiment, the dough is firm enough to knead or roll.

Dough is made using at least one dough ingredient. Dough ingredients include without limitation (cereal) flour, a lecithin source including egg, water, salt, sugar, flavours, a fat source including butter, margarine, oil and shortening, baker's yeast, chemical leavening systems such as a combination of an acid (generating compound) and bicarbonate, a protein source including milk, soy flour, non-chemical oxidants (including ascorbic acid, bromate and azodicarbonamide (ADA), reducing agents (including L-cysteine), emulsifiers (including mono- and diglycerides, such as glycerol monostearate (GMS), sodium stearoyl lactylate (SSL), calcium stearoyl lactylate (CSL), polyglycerol esters of fatty acids (PGE) and diacetyl tartaric acid esters of mono- and diglycerides (DATEM), propylene glycerol monostearate (PGMS) and lecithin, gums (including guar gum pectins and xanthan gum), flavours, acids (including citric acid, propionic acid), starch, modified starch, gluten, humectants (including glycerol) and preservatives.

Dough is usually made from basic dough ingredients including (cereal) flour, such as wheat flour or rice flour, water and optionally salt. Cereals include maize, rice, wheat, barley, sorghum, millet, oats, rye, triticale, buckwheat, quinoa, spelt, einkorn, emmer, durum and kamut.

For leavened products, primarily baker's yeast is used next to chemical leavening systems such as a combination of an acid or acid generating compound and bicarbonate. The dough may be made using a mix, including a bread mix.

Frozen doughs have several advantages compared to fresh doughs, e.g. frozen doughs facilitate dough distribution to smaller bakeries. It also facilitates production planning and allows bakeries to produce bread on demand. Time of baking, sale and consumption of the baked product may be weeks or even months later than the production of the dough. In one embodiment, the dough for the preparation of a frozen dough is unproofed (also called unfermented) and frozen immediately after forming, moulding or shaping the dough. In another embodiment, the dough for the preparation of a frozen dough is proofed and frozen. In one embodiment, the dough comprising a *Penicillium* glucose oxidase is quickly frozen in a blast freezer at approximately -35 degrees Celsius for 45 minutes. After the inner temperature of the dough has reached a temperature of -7 degrees Celsius or lower, the dough pieces were wrapped in plastic bags and stored in a storage freezer. In one embodiment, the dough pieces were wrapped in plastic bags and stored in a storage freezer, once the inner temperature of the dough pieces had reached a temperature in the range of -10 degrees Celsius to -15 degrees Celsius.

In an aspect the frozen dough prepared according to the method of the invention has good dough handling properties after thawing the frozen dough. Dough handling properties include properties which are important for conveniently making portions of dough, conditioning the dough and transporting the dough to dough forming equipment. In an aspect the frozen dough prepared according to the method of the invention after thawing demonstrates good machinability. In an aspect the frozen dough prepared according to the method of the invention demonstrates after thawing reduced dough stickiness to machines used in the bread making process compared to a reference dough. In an aspect the frozen dough according to the invention after thawing shows reduced dough stickiness to machines used in the bread making process compared to a reference dough.

The method of the invention results in an increased dough stability. In the context of the present invention, the term "increased dough stability" means that the dough is less susceptible to forming faults as a consequence of the freezing process.

"Dough stability" is also referred to herein as dough stability of the dough.

This can be observed by the thawed, fermented and shaped dough maintaining better its shape during the time from before entering the oven until after baking.

Before entering the oven herein means of from half an hour before until 1 minute before entering the oven. In an aspect before entering the oven means of from 15 minutes before until 1 minute before entering the oven, in an aspect of from 5 minutes before until 2 minutes before entering the oven.

The dough stability may be evaluated by determining the diameter to height (D:H) ratio of the product baked from the dough, which is the average diameter divided by the height.

$$\text{diameter to height (D:H) ratio} = \frac{\text{average diameter}}{\text{height}}$$

The average diameter is determined by measuring the diameter in one direction and adding to this the diameter perpendicular to the one direction and dividing the sum of the diameters by two. All diameters and heights are measured on the surface of the non-sliced (i.e. whole) product. Typically, the D:H ratio of a baked product prepared from a frozen dough comprising *Penicillium* glucose oxidase is more favourable than the D:H ratio of a baked product prepared from a frozen dough not comprising *Penicillium* glucose oxidase, even after long periods of freezing of the dough. For rolls, a D:H ratio of 1.4-1.7 is favourable.

Dough stability may be evaluated by comparing the shape of the thawed dough before it enters the oven and the shape of the baked product obtained after baking. Dough stability is improved if these shapes are more similar, i.e differ less from each other, than the corresponding shapes of the reference. This can for example be determined by comparing the diameter to height ratio of the dough and the baked product made from the dough as described herein. If these ratios are similar, the shapes of the dough and the baked product are considered to be similar.

Alternatively dough stability may be evaluated by looking at the roundness of the base of the baked product, a rounder shape of the base indicates a better dough stability. Alternatively dough stability may be evaluated by determining the contact area of the base of the baked product with a surface on which it rests, a smaller contact area indicates an increased dough stability.

During preparation (e.g. mixing), fermentation and baking of the dough the cells are formed and developed to result in a crumb structure of a baked product. Crumb structure is important property of a baked product such as bread or cake is crumb structure. Crumb structure herein is used to describe the inside of a baked product such as bread or cake. Crumb structure is at the way the cell structure of the crumb is formed, and the shape and size of the cells.

Different baked product applications benefit from a different crumb structure. There is therefore a need to modify the crumb structure of a baked product. In certain applications it is desired that the baked product has finer crumb structure.

The present invention relates to the use according to claim 11 of a *Penicillium* glucose oxidase having at least 85% identity to amino acids 19 to 604 of SEQ ID NO. 1 for improving the crumb structure of a baked product prepared from the frozen dough.

In an aspect of the use according to the invention as set forth in claim 11, said use is a use of a *Penicillium* glucose oxidase to provide a baked product prepared from a frozen dough having an improved crumb structure as compared a reference baked product prepared from a frozen dough.

In an embodiment of the use according to the invention as set forth in claim 11, said use is a use of a *Penicillium* glucose oxidase to create a finer crumb structure of a baked product prepared from a frozen dough.

The use according to the disclosure is a use of a *Penicillium* glucose oxidase to provide a baked product prepared from a frozen dough having a finer crumb structure as compared a reference baked product prepared from a frozen dough.

The use of the *Penicillium* glucose oxidase according to claim 11 may be by using *Penicillium* glucose oxidase as an enzyme product.

The use according to the invention as set forth in claim 11 may be by using *Penicillium* glucose oxidase as part of a composition, a pre-mix ,i.e. in the form of a composition comprising *Penicillium* glucose oxidase. Said composition (the composition is per se not falling within the present invention) may comprise a *Penicillium* glucose oxidase having an amino acid sequence having at least 85% identity to amino acids 19-604 of SEQ ID No. 1 and a dough ingredient and/or an additional enzyme.

The use according to the invention as set forth in claim 11 may be by using *Penicillium* glucose oxidase as part of a composition, i.e. by use of *Penicillium* glucose oxidase in the form of a composition comprising *Penicillium* glucose oxidase, such as a composition (the composition is per se not falling within the present invention) comprising *Penicillium* glucose oxidase having an amino acid sequence having at least 85% identity to amino acids 19-604 of SEQ ID No. 1 and a dough ingredient and/or an additional enzyme.

The use according to the invention as set forth in claim 11 may be by using *Penicillium* glucose oxidase as part of a pre-mix, i.e. by use of *Penicillium* glucose oxidase in the form of a pre-mix comprising *Penicillium* glucose oxidase, such as a pre-mix (the pre-mix is per se not falling within the present invention) comprising a *Penicillium* glucose oxidase having an amino acid sequence having at least 85% identity to amino acids 19-604 of SEQ ID No. 1 and a dough ingredient and/or an additional enzyme.

A frozen dough comprising *Penicillium* glucose oxidase not only allows for the preparation of baked products which have good dough stability, but also allows for baked products with an improved crumb structure. Baked products baked from a frozen dough comprising *Penicillium* glucose oxidase, generally have an improved flavour compared baked products prepared from frozen dough comprising *Aspergillus* glucose oxidase. Baked products baked from a frozen dough comprising *Penicillium* glucose oxidase, generally have improved taste and/or aroma compared to baked products prepared from frozen dough comprising *Aspergillus* glucose oxidase.

Therefore, in another aspect, the present invention relates to a frozen dough prepared from a dough in which *Penicillium* glucose oxidase has an amino acid sequence which has at least 85%, at least 90%, at least 95%, at least 97%, at least 98% or at least 99% identity to amino acids 19-604 of SEQ ID No. 1, was included before freezing.

The dough for use in the method according to the invention may be prepared in any convenient way. The preparation of a dough from the dough ingredients is well known in the art and includes mixing of dough ingredients and optionally one or more moulding and fermentation steps.

The *Penicillium* glucose oxidase may added to the at least one dough ingredient in the form of a composition. In one embodiment of the method according to the invention Z as set forth in claim 1 to prepare a frozen dough, the dough is prepared by adding a composition comprising a *Penicillium* glucose oxidase having an amino acid sequence which shows at least 85%, at least 90%, at least 95%, at least 97%, at least 98% or at least 99% identity to amino acids 19-604 of SEQ ID No. 1, to at least one dough ingredient. The composition (the composition is per se not falling within the present invention) may comprise between 0.001% and 100% w/w of a *Penicillium* glucose oxidase based on total protein. Preferably, the composition comprises between 1% and 70% w/w of a *Penicillium* glucose oxidase based on total protein. The composition may comprise between 1% and 50% w/w of a *Penicillium* glucose oxidase based on total protein. The composition may comprise between 1% and 30% w/w of a *Penicillium* glucose oxidase based on total protein. The composition may comprise between 5% and 20% w/w of a *Penicillium* glucose oxidase based on total protein. The composition may comprise between 0.001% and 100% w/w of a *Penicillium* glucose oxidase based on total enzyme protein. Preferably, the composition comprises between 1% and 70% w/w of a *Penicillium* glucose oxidase based on total enzyme protein. The composition may comprise between 1% and 50% w/w of a *Penicillium* glucose oxidase based on total enzyme protein. The composition may comprise between 1% and 30% w/w of a *Penicillium* glucose oxidase based on total enzyme The composition may comprise between 5% and 20% w/w of a *Penicillium* glucose oxidase based on total enzyme protein. Total enzyme protein refers to all enzyme protein present in the composition.

The *Penicillium* glucose oxidase may be the only enzymatic component in the composition that is added to the at least one dough The composition (not per se falling within the scope of the present invention) may comprise a *Penicillium* glucose oxidase and at least one additional enzyme. The at least one additional enzyme activity may be selected from enzymes like a protease, such as an endoprotease or an exoprotease; a peptidase, such as an exopeptidase or an endopeptidase; a lipolytic enzyme, such as a triacyl glycerol lipase, a phospholipase, a galactolipase or an enzyme having both phospholipase and galactolipase activity; or a carbohydrase, such as a cellulase, a hemicellulase, in particular a pentosanase such as a xylanase; a cross-linking enzyme, such as a transglutaminase; a maltogenic alpha amylase; an alpha amylase or a beta amylase; an amyloglucosidase, an oxidase, such as a sulfhydryl oxidase, a pyranose oxidase; a peroxidase, a hexose oxidase, a laccase; a protein disulfide isomerase; an asparaginase.

In an aspect the composition (not per se falling within the scope of the present invention) as described herein comprises the *Penicillium* glucose oxidase as described herein and one or more components selected from the group consisting of milk powder, gluten, granulated fat, an additional enzyme, an amino acid, a salt, an oxidant such as ascorbic acid, a reducing agent such as L-cysteine, an emulsifier such as mono-glycerides, di-glycerides, glycerol monostearate, sodium stearoyl lactylate, calcium stearoyl lactylate, polyglycerol esters of fatty acids and diacetyl tartaric acid esters of mono- and diglycerides, gums such as guargum and xanthangum, flavours, acids such as citric acid and propionic acid, starch, modified starch, gluten, humectants such as glycerol, and preservatives. The additional enzyme may be selected from enzymes like a protease, such as a endoprotease or an exoprotease; a peptidase, such as an exopeptidase or an endopeptidase; a lipolytic enzyme, such as a triacyl glycerol lipase, a phospholipase, a galactolipase or an enzyme having both phospholipase and galactolipase activity; or a carbohydrase, such as a cellulase, a hemicellulase, in particular a pentosanase such as a xylanase; a cross-linking enzyme, such as a transglutaminase; a maltogenic alpha amylase; a further amylase such as a further alpha amylase or a beta amylase; an oxidase, a peroxidase, an hexose oxidase, a glucose oxidase, a laccase; a protein disulfide isomerase; an asparaginase

The *Penicillium* glucose oxidase may added to the at least one dough ingredient in the form of a bread improving composition. Typically a bread improving composition is added to improve functionalities of the dough or of the baked product made from the dough. The improvement is in comparison to a dough or baked product which is prepared without using the bread improver and may be reflected in any functionality of the dough or baked product from the dough, such as increased strength of the dough, increased viscoelasticity of the dough, increased dough stability of the dough, reduced stickiness of the dough, improved extensibility of the dough, improved machinability of the dough, increased volume of the baked product, improved flavour of the baked product, improved crumb structure of the baked product, improved crumb softness of the baked product, reduced blistering of the baked product, improved crispiness, improved resilience both initial and in particular after storage, reduced hardness after storage or improved anti-staling properties of the baked product.

In one embodiment, the composition which is added to the at least one dough ingredient is added to improve crumb structure of the baked product and/or to reduce blistering of the baked product.

The term "increased strength of the dough" is defined herein as the property of a dough that has generally more viscoelastic properties and/or requires more work input to mould and shape.

In the context of the present invention, the term "increased viscoelasticity of the dough" means that the dough has a higher tendency to regain its original shape after being subjected to a certain physical strain, such as stretching.

The term "increased dough stability" is defined herein as the property of a dough that is less susceptible to forming faults as a consequence of freezing or frozen storage, thus better maintaining its shape and volume. It may be evaluated by the D:H ratio as described above. Alternatively may be evaluated by looking at the roundness of the base of the baked product, a rounder shape indicates a better dough stability. Alternatively it may be evaluated by determining the contact area of the base of the baked product with a surface on which it rests, a smaller contact area indicates an increased dough stability. "Increased dough stability" may also be referred to as "increased stability of a dough".

The term "reduced stickiness of the dough" is defined herein as the property of a dough that has less tendency to adhere to surfaces, e.g., in the dough production machinery and/or dough transporting equipment. It is either evaluated empirically by the skilled test baker or measured by a suitable system known in the art, such as Warburtons dough stickiness system. Reduced dough stickiness, also referred to herein as reduced stickiness of the dough, may be determined by methods known in the art, such as by evaluation by a skilled baker or by using a texture analyser. In one embodiment, reduced dough stickiness is determined in a Warburtons dough stickiness system. Preferably dough stickiness is determined at ambient temperature. Ambient temperature may typically be between 20 and 30 degrees Celcius.

Dough stickiness may be evaluated through tactile assessment for example while shaping the dough. Alternatively dough stickiness may be evaluated after shaping the dough, by touching the surface of the shaped dough and sensing how much it sticks to the fingers. If the dough sticks less to the fingers than a reference it is evaluated as having a reduced dough stickiness. Alternatively dough stickiness may be evaluated after cutting the dough, by touching the surface of the freshly cut dough surface and sensing how much it sticks to the fingers. If the dough sticks less to the fingers than a reference it is evaluated as having a reduced dough stickiness.

The term "improved extensibility of the dough" is defined herein as the property of a dough that can be subjected to increased strain or stretching without rupture.

The term "improved flavour of the baked product" herein includes the property of a baked product having reduced or no off-flavour.

The term "improved machinability of the dough" is defined herein as the property of a dough that is generally less sticky and/or more firm and/or more elastic. Consequently there is less fouling of plant equipment and a reduced need for cleaning.

The term "improved crumb structure of the baked product" is defined herein as the property of a baked product with finer cells and/or thinner cell walls in the crumb and/or more uniform/homogenous distribution of cells in the crumb and is usually evaluated visually by the baker or by digital image analysis as known in the art (eg. C-cell, Calibre Control International Ltd, Appleton, Warrington, UK). In an aspect of the present invention the term "improved crumb structure of the baked product" is defined as a more uniform/homogeneous crumb structure.
In an aspect of the present invention the term "improved crumb structure of the baked product" is defined as a finer crumb structure.
The parameter concerning evaluation of the crumb structure may be determined my digital analysis of a slice of baked product e.g. a slice of bread or cake.

In an aspect when comparing parameters of a baked product with a reference baked product, the parameter is normalized with respect to the total surface area of the reference slice of baked product that was analyzed. The total surface area of a slice of bread may be provided by the digital analysis apparatus or may be established by multiplying the height and the width of the slice involved.

In an aspect when comparing parameters of a baked product with a reference baked product, the parameter is normalized with respect to the volume of the reference baked product that was analyzed. The volume of the baked product may be determined by an automated bread volume analyser (such as an BVM-3, TexVol Instruments).

A more uniform/homogeneous crumb structure of a baked product may be shown by the area of holes, as determined by digital image analysis, being smaller than the area of holes of a reference baked product.

A finer crumb structure of a baked product may be shown by a higher number of cells per $mm^2$, as determined by digital image analysis, than the number of cells per $mm^2$ of a reference baked product.

A finer crumb structure of a baked product may be shown by a smaller average cell diameter, as determined by digital image analysis, than the average cell diameter of a reference baked product.

A finer crumb structure of a baked product herein includes smaller cells, smaller holes and /or less holes as compared to a reference baked product.

In an aspect a finer crumb structure of a baked product herein includes smaller cells, smaller holes and less holes as compared to a reference baked product.

In an aspect a finer crumb structure of a baked product herein includes smaller average cell diameter and a smaller average hole diameter as compared to a reference baked product.

In an aspect a finer crumb structure of a baked product herein includes smaller average cell diameter, a smaller average hole diameter and/or less holes as compared to a reference baked product.

In an aspect a finer crumb structure of a baked product herein includes smaller average cell diameter, a smaller average hole diameter and less holes as compared to a reference baked product.

In an aspect an improved crumb structure of a baked product herein includes smaller average cell diameter, a smaller average hole diameter, less holes and/or a more uniform/homogenous distribution of cells as compared to a reference baked product.

In an aspect an improved crumb structure of a baked product herein includes smaller average cell diameter, a smaller average hole diameter, less holes and a more uniform/homogenous distribution of cells as compared to a reference baked product.

The term "improved softness of the baked product" is the opposite of "hardness" and is defined herein as the property of a baked product that is more easily compressed and is evaluated either empirically by the skilled test baker or measured by the use of a texture analyzer known in the art.

The term "reduced blistering of the baked product" is defined herein as a visually determined reduction of blistering on the crust of the baked bread.

The term "improved anti-staling properties of the baked product" is defined herein as the properties of a baked product that have a reduced rate of deterioration of quality parameters, e.g. reduced hardness after storage and/or decreased loss of resilience after storage. Anti-staling properties may be demonstrated by a reduced hardness after storage of the baked product. The enzyme composition according to the disclosure or the pre-mix according to the disclosure may result in reduced hardness, e.g. in a baked product that is more easily compressed. The hardness of the baked product may be evaluated either empirically by the skilled test baker or measured by the use of a texture analyzer known in the art. The hardness measured within 24 hours after baking is called initial hardness. The hardness measured 24 hours or more after baking is called hardness after storage, and is also a measure for determining shelf life. In case the initial hardness has reduced, it has improved. In case the hardness after storage has reduced, it has improved. Resilience of the baked product is preferably measured by the use of a texture analyzer known in the art. The resilience measured within 24 hours after baking is called initial resilience. The resilience measured 24 hours or more after baking is called resilience after storage, and is also a measure for determining shelf life. Freshly baked product typically gives crumb of high initial resilience but resilience is lost over shelf-life. Improved anti-staling properties may be demonstrated by a reduced loss of resilience over storage.

Organoleptic qualities, such as taste, aroma and/or (off-)flavour may be evaluated using procedures well established in the baking industry, and may include, for example, the use of a panel of trained taste-testers.

The composition comprising a *Penicillium* glucose oxidase may further comprises one or more components selected from the group consisting of milk (including liquid milk and milk powder), gluten, granulated fat, an additional enzyme, an amino acid, a salt, an oxidant such as ascorbic acid, bromate and azodicarbonamide; a reducing agent such as L-cysteine, an emulsifier such as mono-and diglycerides, glycerol monostearate, sodium stearoyl lactylate, calcium stearoyl lactylate, polyglycerol esters of fatty acids and diacetyl tartaric acid esters of mono- and diglycerides, propylene glycerol monostearate (PGMS) and lecithin, gums such as guar gum and xanthan gum, flavours, acids such as citric acid and propionic acid, starch, modified starch, humectants such as glycerol, and preservatives. In another embodiment, the composition comprises a lipolytic enzyme, preferably a phospholipase. In another embodiment, the composition comprises an alpha amylase.

The composition comprising a *Penicillium* glucose oxidase, such as a *Penicillium* glucose oxidase comprising an amino acid sequence which shows at least 75%, at least 80%, at least 85%, at least 90%, at least 95%, at least 97%, at least 98% or at least 99% identity to amino acids 19-604 of SEQ ID NO. 1, may be formulated in any suitable form. In one embodiment, the composition is formulated in a dry form, such as a freeze-dried or spray-dried powder or a granulate. In another embodiment, the composition is in liquid form, such as in the form of an emulsion, a suspension or a solution. In yet another embodiment, is a paste or a gel.

The *Penicillium* glucose oxidase may added to the at least one dough ingredient in the form of a pre-mix. In another embodiment, the dough for use in the method according to the invention as set forth in claim 1 is prepared from a pre-mix or flour comprising a *Penicillium* glucose oxidase. The term "pre-mix" is defined herein to be understood in its conventional meaning, i.e. as a mix of baking agents, generally including flour, which may be used not only in industrial bread-baking plants/facilities, but also in retail bakeries. The pre-mix may be prepared by mixing a *Penicillium* glucose oxidase or a composition according to the disclosure with a suitable carrier such as flour, starch or a salt. A suitable pre-mix may include, in addition to flour, at least one additive selected from non-chemical oxidants (including ascorbic acid, bromate and azodicarbonamide (ADA), reducing agents (including L-cysteine), emulsifiers (including mono- and diglycerides, such as glycerol monostearate (GMS), sodium stearoyl lactylate (SSL), calcium stearoyl lactylate (CSL), polyglycerol esters of fatty acids (PGE) and diacetyl tartaric acid esters of mono- and diglycerides (DATEM), propylene glycerol monostearate (PGMS) and lecithin, gums (including guar gum pectins and xanthan gum), flavours, acids (including citric acid, propionic acid), starch, modified starch, gluten, humectants (including glycerol) and preservatives. A suitable additive includes propylene glycerol monostearate (PGMS). In one embodiment of the method according to the invention as set forth in claim 1 the dough is prepared using a pre-mix comprising 1 to 50 ppm by weight of flour of a *Penicillium* glucose oxidase with an amino acid sequence which has at least 85%, at least 90%, at least 95%, at least 97%, at least 98% or at least 99% identity to amino acids 19-604 of SEQ ID No. 1. In one embodiment, a flour comprising 1 ppm - 50 ppm by weight of flour of a *Penicillium* glucose oxidase having an activity in a range of about 2500-4000, of about 2800-4000, of about 3000-4000 or of about 3000-3600 glucose oxidase units/gram enzyme is used to prepare a dough according to a method of the present invention as set forth in claim 1. In another embodiment, 1 ppm - 20 ppm by weight of flour of a *Penicillium* glucose oxidase having an activity in a range of about 2500-4000, of about 2800-4000, of about 3000-4000 or of about 3000-3600 glucose oxidase units/gram enzyme is used to prepare a dough according to a method of the present invention as set forth in claim 1.

In one embodiment of the method according to the invention as set forth in claim 1 a dough is prepared from a flour comprising 1 to 50 ppm by weight of flour of a *Penicillium* glucose oxidase with an amino acid sequence which has at least 85%, at least 90%, at least 95%, at least 97%, at least 98% or at least 99% identity to amino acids 19-604 of SEQ ID No. 1. In one embodiment, a flour comprising 1 ppm - 50 ppm by weight of flour of a *Penicillium* glucose oxidase having an activity in a range of about 2500-4000, of about 2800-4000, of about 3000-4000 or of about 3000-3600 glucose oxidase units/gram enzyme is used to prepare a dough according to a method of the present invention as set forth in claim 1. In another embodiment, 1 ppm - 20 ppm by weight of flour of a *Penicillium* glucose oxidase having an activity in a range of about 2500-4000, of about 2800-4000, of about 3000-4000 or of about 3000-3600 glucose oxidase units/gram enzyme is used to prepare a dough according to a method of the present invention as set forth in claim 1.

In one embodiment, the frozen dough is stored frozen for at least one month, at least two months, at least three months, at least four months, at least five months, at least six months, at least seven, eight or ten months. In another embodiment, the frozen dough is stored frozen for at least one year. Freezing may be done at any suitable temperature and is typically done at at least minus 15 degrees Celsius. In an aspect freezing is done at at least minus 18 degrees Celsius, in an aspect at at least minus 20 degrees Celsius.

In another aspect, the disclosure provides a method to prepare a baked product comprising the steps of

a) thawing a frozen dough comprising a *Penicillium* glucose oxidase, such as a *Penicillium* glucose oxidase having an amino acid sequence which shows at least 75%, at least 80%, at least 85%, at least 90%, at least 95%, at least 97%, at least 98% or at least 99% identity to amino acids 19-604 of SEQ ID No. 1; and
b) thereafter baking the thawed dough.

The baking of the dough to produce a baked product may be performed using methods well known in the art. In one embodiment of the invention, the baked product according to the invention as set forth in claim 10 is bread, such as a bread roll.

In another aspect, the present invention relates to a baked product prepared from a frozen dough in which dough *Penicillium* glucose oxidase with an amino acid sequence which shows at least 85%, at least 90%, at least 95%, at least 97%, at least 98% or at least 99% identity to amino acids 19-604 of SEQ ID No. 1, was included before freezing. The preparation of baked products from frozen dough is well known in the art. Typically, the frozen dough is allowed to slowly thaw and then the process may comprise moulding and shaping and fermentation of the dough followed by baking at required temperatures and baking times.

Examples of baked products, whether of a white, brown or whole-meal type, which may be advantageously produced by the present invention include bread (in particular white, whole-meal or rye bread), typically in the form of loaves or rolls, French baguette-type bread, pastries, croissants, brioche, panettone, pasta, noodles (boiled or (stir-)fried), pita bread and other flat breads, tortillas, tacos, pancakes, cookies in particular biscuits, doughnuts, including yeasted doughnuts, bagels, pie crusts, steamed bread, crisp bread, brownies, snack foods (e.g., pretzels, tortilla chips, fabricated snacks, fabricated potato crisps). The term baked product includes, bread containing from 2 to 30 wt% sugar, fruit containing bread, breakfast cereals, cereal bars, soft rolls and gluten-free bread. Gluten free bread herein and herein after is bread than contains at most 20 ppm gluten. Several grains and starch sources are considered acceptable for a gluten-free diet. Frequently used sources are potatoes, rice and tapioca (derived from cassava). Baked product includes without limitation tin bread, loaves of bread, twists, soft pretzels, soft and hard bread, bread sticks buns, such as hamburger buns or steamed buns, focaccia, Middle Eastern and Asian flat breads; such as pita, lavash, chapati, paratta, nan, dried steam bun slice, bread crumb, matzos, melba toast, rusk, zwieback, croutons, yeast leavened and chemically-leavened bread, laminated dough products such as Danish pastry, croissants or puff pastry products, muffins, anish bagels, confectionery coatings, crackers, wafers, pizza crusts, tortillas, pasta products, crepes, waffles and par-baked products. An example of a par-baked product includes, without limitation, partially baked bread that is completed at point of sale or consumption with a short second baking process.

The bread may be white, brown or whole meal bread. The term tortilla as used herein includes corn tortilla and wheat tortilla. A corn tortilla is a type of thin, flat bread, usually unleavened, made from finely ground maize (usually called corn in the US). A flour tortilla is a type of thin, flat bread, usually unleavened, made from finely ground wheat flour. The term tortilla further includes a similar bread from South America called arepa, though arepas are typically much thicker than tortillas. The term tortilla further includes a laobing, a pizza-shaped thick "pancake" from China and an Indian Roti, which is made essentially from wheat flour. A tortilla usually has a round or oval shape and may vary in diameter from about 6 to over 30 cm.

Baked products as set forth in claim 10 obtained by using a dough prepared according to the method of the invention are also encompassed by the present invention. All the embodiments which were mentioned above for the dough, with all the preferences mentioned above, also apply to the baked products according to the invention as set forth in claim 10.

In an aspect a baked product prepared from a frozen dough comprising *Penicillium* glucose oxidase shows improved crumb structure, when compared to a baked product prepared from a frozen dough which does not include a *Penicillium* glucose oxidase.

In an aspect a baked product prepared from a frozen dough comprising *Penicillium* glucose oxidase shows improved taste and aroma, when compared to a baked product prepared from a frozen dough which does not include a *Penicillium* glucose oxidase, in particular compared to a baked product prepared from a frozen dough which comprises an *Aspergillus* glucose oxidase.

In an aspect a baked product prepared from a frozen dough comprising *Penicillium* glucose oxidase shows improved flavour of the baked product, when compared to a baked product prepared from a frozen dough which does not include a *Penicillium* glucose oxidase, in particular compared to a baked product prepared from a frozen dough which comprises an *Aspergillus* glucose oxidase.

In an aspect a baked product prepared from a frozen dough comprising *Penicillium* glucose oxidase shows reduced or no off-flavour, when compared to a baked product prepared from a frozen dough which does not include a *Penicillium* glucose oxidase, in particular compared to a baked product prepared from a frozen dough which comprises an *Aspergillus* glucose oxidase

In an aspect a baked product prepared from a frozen dough comprising *Penicillium* glucose oxidase shows improved crumb structure and an improved flavour of the baked product, when compared to a baked product prepared from a frozen dough which does not include a *Penicillium* glucose oxidase, in particular compared to a baked product prepared from a frozen dough which comprises an *Aspergillus* glucose oxidase.

A dough comprising a *Penicillium* glucose oxidase shows an increased dough stability, when compared to a dough which does not comprise a *Penicillium* glucose oxidase, in an aspect when compared to a dough which comprises an *Aspergillus* glucose oxidase.

In another aspect, the present invention relates to the use of a *Penicillium* glucose oxidase having at least 85% identity to amino acids 19 to 604 of SEQ ID NO. 1 for preparing a frozen dough.

The present invention relates to the use of a *Penicillium* glucose oxidase having at least 85% identity to amino acids 19 to 604 of SEQ ID NO. 1 for improving the crumb structure of a baked product prepared from a frozen dough. The present invention relates to the use of a *Penicillium* glucose oxidase having at least 85% identity to amino acids 19 to 604 of SEQ ID NO. 1 for increasing the dough stability of a dough which has been stored frozen.

The present disclosure relates to the use of a *Penicillium* glucose oxidase in the production of a roll, for obtaining a roll having a diameter to height ratio in the range of 1.4 to 1.7, whereby this ratio is determined as described in the present application.

The present disclosure relates to the use of a *Penicillium* glucose oxidase for a combination of two or more of these uses.

A *Penicillium* glucose oxidase having at least 85% identity to amino acids 19 to 604 of SEQ ID NO. 1 may be obtained by any suitable means. In one embodiment, it is isolated from a source, in particular a prokaryotic or eukaryotic microorganism, containing the enzyme. Suitable examples of microorganisms are mammalian, plant, fungal and algal microorganisms as mentioned below. In one embodiment, the *Penicillium* glucose is isolated from a *Penicillium* species, in particular from *Penicillium chrysogenum.* A suitable example of such a *Penicillium* glucose oxidase is a *Penicillium* glucose oxidase having an amino acid sequence according to amino acids 19-604 of SEQ ID NO. 1 or a glucose oxidase with an amino acid sequence which has at least 85% identity to amino acids 19-604 of SEQ ID No.1. In one embodiment, the glucose oxidase has an amino acid sequence which has at least 90%, at least 95%, at least 97%, at least 98% or at least 99% identity to amino acids 19-604 of SEQ ID NO. 1.

In another embodiment, the *Penicillium* glucose oxidase is generated using standard molecular biology techniques to provide a glucose oxidase which would otherwise be obtainable from a *Penicillium* fungus, e.g. by *de novo* synthesis of a nucleotide sequence according to SEQ ID No. 2 or a nucleotide sequence which encodes a protein having an amino acid sequence having at least 85%, at least 90%, at least 95%, at least 97%, at least 98% or at least 99% identity to amino acids 19-604 of SEQ ID No.1. In one embodiment, a nucleotide sequence according to SEQ ID No. 2 is used. Such a nucleotide sequence may then be used for transformation of a host microorganism. In another embodiment, the *Penicillium* glucose oxidase is generated using site-saturation mutagenesis, scanning mutagenesis, insertional mutagenesis, random mutagenesis, site-directed mutagenesis, and directed-evolution of an existing glucose oxidase, e.g. of the one depicted in SEQ ID NO. 1, as well as various other recombination approaches known to a skilled person in the art. Glucose oxidases (EC 1.1.3.4) catalyse the oxidation of glucose into gluconic acid and hydrogen peroxide using atmospheric oxygen.

In the context of the present invention, in order to determine the percentage of sequence identity of two amino acid sequences or of two nucleic acid sequences, the sequences are aligned for optimal comparison purposes. In order to optimize the alignment between the two sequences, gaps may be introduced in any of the two sequences that are compared. Such alignment is carried out over the full length of the sequences being compared. The sequence identity is the percentage of identical matches between the two sequences over the reported aligned region. Upon the alignment of two sequences, the resulting aligned amino acid positions are usually referred to as corresponding positions. The percent sequence identity between two amino acid sequences or between two nucleotide sequences may be determined using the Needleman and Wunsch algorithm for the alignment of two sequences. (Needleman, S. B. and Wunsch, C. D. (1970) J. Mol. Biol. 48, 443-453). Both amino acid sequences and nucleotide sequences can be aligned by the algorithm. The Needleman-Wunsch algorithm has been implemented in the computer program NEEDLE. For the purpose of this invention the NEEDLE program from the EMBOSS package was used (version 2.8.0 or higher, EMBOSS: The European Molecular Biology Open Software Suite (2000) Rice,P. Longden,I. and Bleasby,A. Trends in Genetics 16, (6) p. 276-277, http://emboss.bioinformatics.nl/). For protein sequences EBLOSUM62 is used for the substitution matrix. For nucleotide sequences, EDNAFULL is used. The optional parameters used are a gap-open penalty of 10 and a gap extension penalty of 0.5. The skilled person will appreciate that all these different parameters will yield slightly different results but that the overall percentage identity of two sequences is not significantly altered when using different algorithms.

After alignment by the program NEEDLE as described above the percentage of sequence identity between a query sequence and a sequence of the disclosure is calculated as follows: Number of corresponding positions in the alignment showing an identical amino acid or identical nucleotide in both sequences divided by the total length of the alignment after subtraction of the total number of gaps in the alignment. The identity as defined herein can be obtained from NEEDLE by using the NOBRIEF option and is labeled in the output of the program as "longest-identity".

The nucleic acid and protein sequences of the present disclosure can further be used as a "query sequence" to perform a search against public databases to, for example, identify other family members or related sequences. Such searches can be performed using the NBLAST and XBLAST programs (version 2.0) of Altschul, et al. (1990) J. Mol. Biol. 215:403-10. BLAST nucleotide searches can be performed with the NBLAST program, score = 100, word length = 12 to obtain nucleotide sequences similar to nucleic acid molecules of the disclosure. BLAST protein searches can be performed with the XBLAST program, score = 50, word length = 3 to obtain amino acid sequences similar to protein molecules of the disclosure. To obtain gapped alignments for comparison purposes, Gapped BLAST can be utilized as described in Altschul et al., (1997) Nucleic Acids Res. 25(17): 3389-3402. When utilizing BLAST and Gapped BLAST programs, the default parameters of the respective programs (e.g., XBLAST and NBLAST) can be used. See the homepage of the National Center for Biotechnology Information at http://www.ncbi.nlm.nih.gov/.

Any microorganism may be used as a recombinant host cell to produce a *Penicillium* glucose oxidase. In one embodiment, the microorganism is a prokaryotic cell, such as a Gram-negative or Gram-positive bacterium. Suitable bacteria include *Escherichia, Anabaena, Caulobactert, Cyanobacteria, Gluconobacter, Rhodobacter, Pseudomonas, Paracoccus, Bacillus, Brevibacterium, Corynebacterium, Rhizobium (Sinorhizobium), Flavobacterium, Klebsiella, Enterobacter, Lactobacillus, Lactococcus, Methylobacterium, Moraxella, Neisseria, Staphylococcus, Streptomyces* or *Thermoactinomyces*. In another embodiment, the microorganism is a eukaryotic cell, such as a mammalian cell, insect cell, plant cell, fungal cell or algal cell. Suitable examples of mammalian cells are CHO cells, COS cells, 293 cells, Per.C6® cells, and hybridomas. Suitable examples of insect cells include Sf9 and Sf21 cells and derivatives thereof. Suitable examples of fungal cells include yeast cells, such as *Candida, Hansenula, Kluyveromyces, Pichia, Saccharomyces, Schizosaccharomyces,* or *Yarrowia* strain; more preferably *Kluyveromyces lactis, S. cerevisiae, Hansenula polymorpha, Yarrowia lipolytica* and *Pichia pastoris,* or a filamentous fungi. Filamentous fungi include all filamentous forms of the subdivision Eumycota and Oomycota (as defined by Hawksworth et al., In, Ainsworth and Bisby's Dictionary of The Fungi, 8th edition, 1995, CAB International, University Press, Cambridge, UK). Filamentous fungal strains include strains of *Acremonium, Agaricus, Aspergillus, Aureobasidium, Chrysosporium, Coprinus, Cryptococcus, Filibasidium, Fusarium, Humicola, Magnaporthe, Mucor, Myceliophthora, Neocallimastix, Neurospora, Paecilomyces, Penicillium, Piromyces, Panerochaete, Pleurotus, Rasamsonia, Schizophyllum, Talaromyces, Thermoascus, Thielavia, Tolypocladium,* and *Trichoderma.* Preferred filamentous fungal cells belong to a species of an *Aspergillus, Chrysosporium, Myceliophthora, Penicillium, Talaromyces, Fusarium, Rasamsonia, Thermoascus* or *Trichoderma* genus, and most preferably a species of *Aspergillus niger, Aspergillus awamori, Aspergillus foetidus, Aspergillus sojae, Aspergillus fumigatus, Aspergillus oryzae, Fusarium oxysporum, Myceliophthora thermophila, Rasamsonia emersonii, Trichoderma reesei, Talaromyces emersonii, Thermoascus aurantiacus* or *Penicillium chrysogenum.* Algae is the group of unicellular and multicellular eukaryortic photosynthetic organisms, including microalgae, such as Dunaliella, Spirulina and Chlorella. Algae include algal host cells and microalgae, such as Schizochitrium. In one embodiment, the recombinant host cell comprising a nucleotide sequence or a nucleic acid molecule according to the disclosure is an *Aspergillus, Bacillus, Chrysosporium, Escherichia, Kluyveromyces, Myceliophthora, Penicillium, Pseudomonas, Rasamsonia, Saccharomyces, Streptomyces* or *Talaromyces* species, preferably a *Bacillus subtilis, Bacillus amyloliquefaciens, Bacillus licheniformis, Escherichia coli, Aspergillus niger, Aspergillus oryzae, Myceliophthora thermophila, Rasamsonia emersonii or Trichoderma reesei* species. The recombinant host cell is preferably capable of expressing or overexpressing the glucose oxidase, for example as described in WO 2010/121933 or WO 2012/001169. The recombinant host cell, such as a host cell belonging to the genus *Aspergillus,* may further comprise one or more modifications in its genome such that the recombinant microbial host cell is deficient in the production of at least one product selected from glucoamylase (glaA), acid stable alpha-amylase (amyA), neutral alpha-amylase (amyBI and amyBII), oxalic acid hydrolase (oahA), a toxin, preferably ochratoxin and/or fumonisin, a protease transcriptional regulator prtT, PepA, a product encoded by the gene hdfA and/or hdfB, a non-ribosomal peptide synthase *nps*E, *ags*E or *amy*C if compared to a parent host cell and measured under the same conditions. Suitable methods of producing said host cells include the ones described in WO2012/001169 and WO2014013074.

The glucose oxidase used in the present disclosure may be fusion proteins. Techniques for producing fusion polypeptides are known in the art, and include ligating the coding sequences encoding the polypeptides so that they are in frame. Expression of the fused polypeptide is under control of the same promoter(s) and terminator. The hybrid polypeptides may comprise a combination of partial or complete polypeptide sequences obtained from at least two different polypeptides wherein one or more may be heterologous to a host cell. Such fusion polypeptides from at least two different polypeptides may comprise a binding domain from one polypeptide, such as a starch binding domain or a carbohydrate binding domain, operably linked to a catalytic domain from a second polypeptide. Examples of fusion polypeptides and signal sequence fusions are for example as described in WO2010/121933, WO2013/007820 and WO2013/007821.

In the context of the present invention the term 'polypeptide' refers to a molecule which contains a backbone of a chain of at least ten amino acids, wherein the amino acids are covalently linked to each other by peptide bonds. These backbone amino acids groups may be linked to other groups, such as other amino acid sequences, sugar groups or lipid groups. The polypeptide may contain structural features, such as alpha-helices, beta-pleated sheets or disulphide bridges. A polypeptide used according to the present disclosure may comprise a catalytic domain and one or more binding domains, such as a starch or carbohydrate binding domain. In the context of the present invention, the amino acid sequence is also referred to as 'polypeptide sequence' or 'protein sequence'. The term 'polypeptide' includes proteins.

In the Figures and in other places of the description of the present invention where the one letter code for amino acids is used, A stands for Alanine, C for Cysteine, D or Aspartic acid, E for Glutamic acid, F for Phenylalanine, G for Glycine, H for Histidine, I for Isoleucine, K for Lysine, L for Leucine, M for Methionine, N for Asparagine, P for Proline, Q for Glutamine, R for Arginine, S for Serine, T for Threonine, V for Valine, W for Tryptophan, Y for Tyrosine Such one letter codes are commonly known in the art, see e.g. Sambrook, et al. (Molecular Cloning: A Laboratory Manual, 2nd ed. Cold Spring Harbor Laboratory, Cold Spring Harbor Laboratory Press, Cold Spring Harbor, NY, 1989).

The *Penicillium* glucose oxidase typically has an activity in the range of about 2500 to 4000 glucose oxidase units/gram enzyme when determined according to the assay described below. In one embodiment, the *Penicillium* glucose oxidase has an activity in the range of about 2800 to 4000 glucose oxidase units/gram enzyme. In another embodiment, the *Penicillium* glucose oxidase has an activity in the range of about 3000 to 4000 glucose oxidase units/gram enzyme. In yet another embodiment, the *Penicillium* glucose oxidase has an activity in the range of about 3000 to 3600 glucose oxidase units/gram enzyme. In yet another embodiment, the *Penicillium* glucose oxidase has an activity of about 3300 glucose oxidase units/gram enzyme. Glucose oxidase activity is determined in an assay in which gluconic acid formed is titrated. 1 ml of diluted glucose oxidase is added to 25 ml of preheated 30 g/l glucose monohydrate solution at 35 degrees C. Sample dilutions and substrate are prepared in 50 mM HAc buffer at pH 5.1, containing 50 mM NaCl. After 15 minutes incubation at 35 degrees C, the reaction is terminated by the addition of 10 ml 0.1 N NaOH, at the same time neutralizing the gluconic acid formed. Excess NaOH is titrated with 0.05 M HCl. The difference in HCl consumption between a sample and blank run is a measure for the amount of glucose oxidase activity. One glucose oxidase unit is defined as the amount of enzyme needed to oxidize 3 mg of glucose to gluconic acid under conditions of the assay.

Glucose oxidase activities may be determined using alternative assays, such as spectrophotometrically at 450 nm using o-dianisidine as described by Witteveen et al. 1990 ("Glucose oxidase overproducing and negative mutants of Aspergillus niger", Appl. Microbiol. Biotechnol 33:683-686) or a glucose oxidase assay as described in the Food Chemicals Codex (FCC).

Hereafter the invention is illustrated by the following non-limiting examples.

## EXAMPLES

### Bread improver

The bread improver used was a mixture of vital wheat gluten, guar gum, emulsifier, flour treatment agent and comprised 150 ppm ascorbic acid (from DSM Nutritional Products, Switzerland), 1 ppm Bakezyme® P500 (fungal alpha-amylase from DSM Food Specialties, The Netherlands), 30 ppm Bakezyme® HSP6000 (fungal hemicellulase from DSM Food Specialties, The Netherlands), 150ppm Bakezyme® AG1100 (fungal amyloglucosidase from DSM Food Specialties, The Netherlands and Kolibri flour (Meneba, the Netherlands) as filling material up to a dosage level of 1% calculated on the flour weight (Table 1).

Where appropriate in the examples, glucose oxidase was added to these enzymes. ppm based in weight of flour.

### Glucose oxidases

The *Penicillium* glucose oxidase used was *Penicillium chrysogenum* glucose oxidase with a protein sequence as depicted in SEQ ID No.1 prepared by transformation of an *Aspergillus* with a construct comprising a cDNA sequence as depicted in SEQ ID No. 2 and subsequent expression of the enzyme.

For comparison, BakeZyme® GO10.000 BG, (*Aspergillus niger* glucose oxidase, from DSM Food Specialties, the Netherlands) was used.

### Glucose oxidases

The *Penicillium* glucose oxidase used was *Penicillium chrysogenum* glucose oxidase with a protein sequence as depicted in SEQ ID No.1 prepared by transformation of an *Aspergillus* with a construct comprising a cDNA sequence as depicted in SEQ ID No. 2 and subsequent expression of the enzyme.

For comparison, BakeZyme® GO10.000 BG, (*Aspergillus tubingensis* glucose oxidase, from DSM Food Specialties, the Netherlands) was used.

**Determination of glucose oxidase activity**

Glucose oxidase activity was determined in an assay in which gluconic acid formed is titrated. Thereto, 1 ml of diluted glucose oxidase was added to 25 ml of preheated 30 g/l glucose monohydrate solution at 35 degrees C. Sample dilutions and substrate were prepared in 50 mM HAc buffer at pH 5.1, containing 50 mM NaCl. After 15 minutes incubation at 35 degrees C, the reaction was terminated by the addition of 10 ml 0.1 N NaOH, at the same time neutralizing the gluconic acid formed. Excess NaOH was titrated with 0.05 M HCI. The difference in HCI consumption between a sample and blank run is a measure for the amount of glucose oxidase activity. One glucose oxidase unit is defined as the amount of enzyme needed to oxidize 3 mg of glucose to gluconic acid under conditions of the assay.

Activity of *Penicillium* glucose oxidase used was 3300 glucose oxidase units/gram enzyme. ppm means mg/kg, e.g. 20 ppm means 20 mg of the indicated product per kg flour.

**Determination of diameter to height (D:H) ratio of the baked product.**

The diameter to height ratio was determined by dividing the average diameter by the height of the baked product.

$$\text{diameter to height ratio} = \frac{\text{average diameter}}{\text{height}}$$

The average diameter was determined by measuring the diameter in one direction and adding to this the diameter perpendicular to the one direction and dividing the sum of the diameters by two. All diameters and heights were measured on the surface of the non-sliced (i.e. whole) baked product. For rolls, a diameter to height ratio of 1.4-1.7 was considered favourable.

**Example 1 The effect of *Penicillium* glucose oxidase on baked product from frozen dough.**

A bread dough was prepared by mixing and kneading the ingredients listed in Table 1 together with no (Control) or 10 ppm or 20 ppm of a glucose oxidase based on weight of flour.

**Table 1 Basic bread recipe**

| Ingredient | % based on flour weight | Type |
|---|---|---|
| Bread flour | 100 | Epi-B, Paniflour, Belgium |
| gluten | 2 | Amygluten 110, Tereos Syral, Belgium |
| water | 62 | |
| yeast | 5 | Koningsgist, AB Mauri, the Netherlands |
| Salt | 1.8 | Suprasel, Akzo Nobel, the Netherlands |
| Bread improver | 1 | See materials & methods |

Two glucose oxidases were used, a *Penicillium* glucose oxidase with an amino acid sequence according to SEQ ID No.1 and Fig1, and *Aspergillus* glucose oxidase (BakeZyme® GO10.000 BG).

The ingredients were kneaded into a well-developed dough with an inner temperature of 20°C (+/- 0.5°C). Then, the dough was divided into equal dough pieces. (1650 gram /30 pcs), rounded and left to relax for about 5 minutes. The dough was subsequently moulded and quickly frozen in a blast freezer (-35°C) for 45 minutes. After the inner temperature of the dough had reached a temperature of about -7 degrees Celsius, the dough pieces were wrapped in plastic bags and stored in a storage freezer at -18°C.

After one 1 night (1N) and two months (2M) frozen storage time, dough pieces were taken from the freezer, slowly thawed and warmed up to 28°C under humidity control at which they proofed until the desired volume. After proofing, they were slashed once, through the skin, with a sharp knife and cut in half.

One half of each dough piece was baked for 20 minutes at 240°C with injected steam immediately after proofing. This was called the "Normal Proof" or "NP". The other half of each dough piece was baked 30 minutes after the first half under the same conditions. Since this half had more time to proof, these circumstances were called "Extended Proof" or "EP". Results for Extended Proof are evaluated in Example 2. Properties of the baked products, such as viscoelasticity, crumb structure, dough stability and taste and aroma, were evaluated.

The dough which included *Penicillium* glucose oxidase had good handling properties and good viscoelasticity.

The dough stability was evaluated by determining the diameter to height (D:H) ratio of baked rolls prepared from the dough after frozen storage in comparison to a control to which no glucose oxidase was added while preparing the dough. A D:H ratio of 1.4-1.7 was considered to be favourable. The results are presented in Table 2 and show that rolls became wider (increased D:H ratio) upon increased frozen storage time. After a two months storage, the D:H ratio of the control was 2.0, by which it falls outside the favoured range of 1.4-1.7. The D:H ratio of rolls prepared with dough comprising *Aspergillus* or *Penicillium* glucose oxidase that had been stored frozen for two months, was within the favoured range of 1.4-1.7. This indicates that the glucose oxidase containing doughs have improved dough stability compared to the control dough.

**Table 2 D:H ratios of baked rolls in the Normal Proof experiment with frozen dough stored for various time periods.**

| | 1(control) | 2 | 3 | 4 | 5 |
|---|---|---|---|---|---|
| BakeZyme® GO10.000 BG* | | 10 ppm | | 20 ppm | |
| *Penicillium* glucose oxidase | | | 10 ppm | | 20 ppm |
| stored for 1 Night | 1.7 | 1.6 | 1.6 | 1.6 | 1.5 |
| stored for 2 Months | 2.0 | 1.7 | 1.7 | 1.6 | 1.6 |
| *(*Aspergillus* glucose oxidase, from DSM Food Specialties, the Netherlands)<br>*(*Aspergillus tubingensis* glucose oxidase, from DSM Food Specialties, the Netherlands) | | | | | |

Visual inspection by experienced bakers showed that the rolls prepared with *Penicillium* glucose oxidase had finer crumb structure than the rolls prepared with *Aspergillus* glucose oxidase.

The taste and aroma of the baked products prepared were also evaluated by experienced bakers. Whereas the aroma of the rolls made with *Aspergillus* glucose oxidase showed an off-flavour, it was noticed that the rolls made with *Penicilllium* glucose oxidase had a far more neutral aroma.

**Example 2 The effect of *Penicillium* glucose oxidase on baked product from frozen dough after extended proofing time.**

The other halves of the dough pieces prepared in Example 1 were baked 30 minutes after the first halves under the same conditions and their properties, such as elasticity, crumb structure, dough stability and taste and aroma, were evaluated.

The dough stability from which these baked rolls were prepared was evaluated by determining D:H ratio of the baked rolls after frozen storage of the dough. The results are presented in Table 3.

**Table 3 D:H ratios of baked rolls in the Extended Proof experiment with frozen dough stored for various time periods.**

| | 1 (control) | 2 | 3 | 4 | 5 |
|---|---|---|---|---|---|
| BakeZyme® GO10.000 BG* | | 10 ppm | | 20 ppm | |
| *Penicillium* glucose oxidase | | | 10 ppm | | 20 ppm |
| stored for 1 Night | 1.8 | 1.7 | 1.7 | 1.6 | 1.6 |
| stored for 2 Months | 2.1 | 1.9 | 1.8 | 1.8 | 1.7 |
| * *Aspergillus* glucose oxidase, from DSM Food Specialties, the Netherlands<br>*(*Aspergillus tubingensis* glucose oxidase, from DSM Food Specialties, the Netherlands) | | | | | |

Rolls became wider (increased D:H ratio) upon increased frozen storage time. After a two months storage, the D:H ratio of the control was 2.1, by which it falls outside the favoured range of 1.4-1.7. The D:H ratio of rolls prepared with dough comprising *Aspergillus* or *Penicillium* glucose oxidase was in or close to close to the favoured range of 1.4 to 1.7. This indicates that the glucose oxidase containing doughs have improved dough stability compared to the control dough.
Baking dough made with 20 ppm *Penicillium* glucose oxidase, after two month of frozen storage, resulted in a baked product having a D:H ratio which still falls within the favourable range of 1.4 to 1.7.

Visual inspection by experienced bakers showed that the rolls prepared with *Penicillium* glucose oxidase had finer crumb structure than the rolls prepared with *Aspergillus* glucose oxidase.

The taste and aroma of the baked products were evaluated by experienced bakers. Whereas the aroma of the rolls made with *Aspergillus* glucose oxidase showed an off-flavour, it was noticed that the rolls made with *Penicilllium* glucose oxidase had a far more neutral aroma.

**Claims**

1. A method for preparing a frozen dough, which method comprises including a *Penicilllium* glucose oxidase in the dough during preparation of the dough, wherein the *Penicillium* glucose oxidase has an amino acid sequence having at least 85% identity to amino acids 19 to 604 of SEQ ID NO. 1, and cooling the dough to a temperature in the range of - 35 to -5 degrees Celsius.

2. The method according to claim 1, which method comprises:

   a) preparing the dough including the step of adding a *Penicillium* glucose oxidase to at least one dough ingredient.

3. The method according to claim 1 or 2, wherein the dough is frozen as an unproofed dough.

4. The method according to any one of claims 1 to 3, wherein the dough is stored frozen for at least two months.

5. The method according to any one of claims 1 to 4, wherein the *Penicillium* glucose oxidase is included or added in an amount of 1 to 50 ppm based on weight of flour.

6. A frozen dough comprising a *Penicillium* glucose oxidase, wherein the *Penicillium* glucose oxidase has an amino acid sequence having at least 85% identity to amino acids 19 to 604 of SEQ ID NO. 1.

7. The frozen dough according to claim 6, which has been stored frozen for at least two months.

8. The frozen dough according to claims 6 or 7, comprising 1 to 50 ppm of a *Penicillium* glucose oxidase.

9. A frozen dough prepared by a method according to any one of claims 1 to 5.

10. A baked product prepared from a frozen dough according to claims 6 to 9.

11. Use of a *Penicillium* glucose oxidase in the preparation of a frozen dough, wherein the *Penicillium* glucose oxidase has an amino acid sequence having at least 85% identity to amino acids 19 to 604 of SEQ ID NO. 1.

12. The use according to claim 11 for improving the crumb structure of a baked product prepared from the frozen dough.

13. The use according to claim 12 to increase the dough stability of the frozen dough.

**Patentansprüche**

1. Verfahren zur Herstellung eines gefrorenen Teigs, wobei das Verfahren Aufnehmen einer *Penicillium*-Glucoseoxidase in den Teig während der Herstellung des Teigs, wobei die *Penicillium*-Glucoseoxidase eine Aminosäuresequenz mit wenigstens 85 % Identität mit den Aminosäuren 19 bis 604 von SEQ ID NO. 1 aufweist, und Kühlen des Teigs auf eine Temperatur in dem Bereich von -35 bis -5 Grad Celsius umfasst.

2. Verfahren gemäß Anspruch 1, wobei das Verfahren umfasst:

   a) Herstellen des Teigs, umfassend den Schritt des Zugebens einer *Penicillium*-Glucoseoxidase zu wenigstens einem Teigbestandteil.

3. Verfahren gemäß Anspruch 1 oder 2, wobei der Teig als ungegangener Teig eingefroren wird.

4. Verfahren gemäß einem der Ansprüche 1 bis 3, wobei der Teig wenigstens zwei Monate lang gefroren gelagert wird.

5. Verfahren gemäß einem der Ansprüche 1 bis 4, wobei die *Penicillium*-Glucoseoxidase in einer Menge von 1 bis 50 ppm, bezogen auf das Gewicht an Mehl, eingeschlossen oder zugegeben wird.

6. Gefrorener Teig, der eine *Penicillium*-Glucoseoxidase umfasst, wobei die *Penicillium*-Glucoseoxidase eine Aminosäuresequenz mit wenigstens 85 % Identität mit den Aminosäuren 19 bis 604 von SEQ ID NO. 1 aufweist.

7. Gefrorener Teig gemäß Anspruch 6, der wenigstens zwei Monate lang gefroren gelagert worden ist.

8. Gefrorener Teig gemäß Ansprüchen 6 oder 7, umfassend 1 bis 50 ppm an einer *Penicillium*-Glucoseoxidase.

9. Gefrorener Teig, hergestellt durch ein Verfahren gemäß einem der Ansprüche 1 bis 5.

10. Backware, hergestellt aus einem gefrorenen Teig gemäß Ansprüchen 6 bis 9.

11. Verwendung einer *Penicillium*-Glucoseoxidase bei der Herstellung eines gefrorenen Teigs, wobei die *Penicillium*-Glucoseoxidase eine Aminosäuresequenz mit wenigstens 85 % Identität mit den Aminosäuren 19 bis 604 von SEQ ID NO. 1 aufweist.

12. Verwendung gemäß Anspruch 11 zum Verbessern der Krumenstruktur einer aus dem gefrorenen Teig hergestellten Backware.

13. Verwendung gemäß Anspruch 12 zum Verbessern der Teigstabilität des gefrorenen Teigs.

**Revendications**

1. Méthode de préparation d'une pâte congelée, laquelle méthode comprend l'incorporation d'une glucose oxydase de *Penicillium* dans la pâte lors de la préparation de la pâte, où la glucose oxydase de *Penicillium* possède une séquence d'acides aminés ayant au moins 85% d'identité avec les acides aminés 19 à 604 de SEQ ID n° 1, et le refroidissement de la pâte jusqu'à une température dans la plage allant de -35 à -5°C.

2. Méthode selon la revendication 1, laquelle méthode comprend :

   a) la préparation de la pâte, comportant l'étape d'addition d'une glucose oxydase de *Penicillium* à au moins un ingrédient de pâte.

3. Méthode selon la revendication 1 ou 2, dans laquelle la pâte est congelée sous forme de pâte non levée.

4. Méthode selon l'une quelconque des revendications 1 à 3, dans laquelle la pâte est stockée sous forme congelée pendant au moins deux mois.

5. Méthode selon l'une quelconque des revendications 1 à 4, dans laquelle la glucose oxydase de *Penicillium* est incorporée ou ajoutée selon une quantité allant de 1 à 50 ppm, sur la base du poids de farine.

6. Pâte congelée comprenant une glucose oxydase de *Penicillium,* dans laquelle la glucose oxydase de *Penicillium* possède une séquence d'acides aminés ayant au moins 85% d'identité avec les acides aminés 19 à 604 de SEQ ID n° 1.

7. Pâte congelée selon la revendication 6, qui a été stockée sous forme congelée pendant au moins deux mois.

8. Pâte congelée selon les revendications 6 ou 7, comprenant de 1 à 50 ppm d'une glucose oxydase de *Penicillium.*

9. Pâte congelée préparée par une méthode selon l'une quelconque des revendications 1 à 5.

10. Produit de panification, préparé à partir d'une pâte congelée selon les revendications 6 à 9.

11. Utilisation d'une glucose oxydase de *Penicillium* dans la préparation d'une pâte congelée, dans laquelle la glucose oxydase de *Penicillium* possède une séquence d'acides aminés ayant au moins 85% d'identité avec les acides aminés 19 à 604 de SEQ ID n° 1.

12. Utilisation selon la revendication 11, destinée à l'amélioration de la structure de la mie d'un produit de panification préparé à partir de la pâte congelée.

13. Utilisation selon la revendication 12, destinée à l'augmentation de la stabilité de pâte de la pâte congelée.

```
MKSTIITSIL FSVAAVQAYS PAEQIDVQSH LLSDPTKVEG ETYDYVIAGG GLTGLTVAAK     60
LSENPKIKVL VIEKGFYESN DGPIIEDPNA YGEIFGTSVD QNYLTVPLIN NRTGEIKSGL    120
GLGGSTLING DSWTRPDKVQ IDSWEKVFGM EGWNWDNVFQ YMQKAERSRP PTAAQIEAGH    180
FYDPACHGTD GTVHAGPRDN GKPWSPLMRA LMNTVSAFGV PVQKDFHCGH PRGVSMIPNN    240
LHENQIRADA AREWLLPNYQ RDNLQILTGQ KVGKVLFNQT ASGPKAVGVN FGTNKAVNFN    300
VYAKQEVLLA AGSAISPLIL EYSGIGIKSV LDKAGVKQLL ELPVGLNMQD QTTTTVRSRA    360
NNAPGQGQAA YFANFTEVLG DHAAQGIKLL DTKLDQWAEE TVARGGFHNV TALKIQYENY    420
RNWLLDEDVA FAELFFDTEG KINFDIWNLI PFTRGSVHIL SSDPYLWQYA NDPKFFMNEL    480
DLLGQAAATK LGRELSSAGE MKKYYAGETI PGDNLPQDAT VEQWEDYVMM NFRPNWHAVS    540
TCSMMSRELG GVVDATAKVY GTQGLRVIDG SIPPTQVSSH VMTVFYGMAL RIAESVLEDY    600
AKKA                                                                 604
```

# FIG.1

```
atgaagtcca ctattatcac ctccattctc ttctctgtgg ctgccgtcca ggcctatagc     60
ccggccgagc agatcgacgt ccagtctcac ctgctttctg accccaccaa ggtcgaggga    120
gagacttacg actatgtcat tgctggtggt ggtttgactg gtctgaccgt ggctgccaag    180
ctgtctgaaa acccgaagat caaagtcctt gtgattgaga agggattcta cgaatccaac    240
gatggaccga tcatcgagga ccccaacgcc tatggggaga tctttggaac tagtgtggat    300
cagaattatc tcacagttcc cctcatcaac aaccgaactg gggaaattaa gtctggcctc    360
ggtcttggtg gctcgacctt gatcaacggc gattcctgga cccgccccga caaggtccag    420
atcgactcat gggaaaaggt ctttggcatg gagggctgga actgggacaa tgtcttccag    480
tacatgcaga aagctgagcg ctcgcgcccc ccgactgccg cccagattga agccggtcac    540
ttctacgacc ctgcctgtca tggaacagac ggaaccgttc atgccggccc tcgcgacaac    600
ggcaagcctt ggtccccact gatgcgagcc ctcatgaaca ccgtctccgc tttcggtgtc    660
cccgtccaga aggacttcca ctgcggtcac cccccgtggtg tctcgatgat cccgaacaac   720
ctccatgaga accagatccg ggctgatgcc gctcgcgaat ggcttcttcc caactaccag    780
cgcgataacc tgcagatcct gactggccag aaggtcggaa aggttttgtt caaccagacc    840
gcatctggac ctaaggctgt tggtgtgaac ttcggtacca acaaggctgt taacttcaat    900
gtctacgcca agcaagaagt tctgttggcc gccggatctg ccatttctcc tttgatcctt    960
gaatactccg gtattggtat caagtccgtc cttgacaagg ccggtgttaa gcagctcctc   1020
gaactccctg ttggtctcaa catgcaagac cagaccacta ccactgttcg gtcccgcgcc   1080
aacaacgcac ctggacaagg ccaggccgct tactttgcca acttcaccga ggttctcggc   1140
gaccacgccg cccagggtat taagttgctg gacaccaagc ttgaccagtg ggccgaggag   1200
accgttgccc gcggtggctt ccacaatgtg actgccctca agatccagta tgagaactac   1260
cgtaactggc tccttgatga ggacgttgca tttgccgagc tcttcttcga cactgagggc   1320
aagatcaact ttgatatctg gaatcttatc cccttcactc gcggttccgt ccacatcctc   1380
agcagtgacc cttacctctg gcaatacgca aatgacccca agttcttcat gaacgagctg   1440
gatcttctcg gccaggccgc tgctactaag ctgggtcgtg agctctctag cgctggtgag   1500
atgaagaagt actacgctgg cgagaccatc cccggcgaca acctgcccca ggatgccacc   1560
gtcgagcagt gggaggacta cgtgatgatg aacttccgtc ctaactggca cgctgttagc   1620
acctgctcta tgatgtcccg cgagcttggt ggtgtcgtcg acgctactgc caaggtctac   1680
ggtactcagg gcctccgtgt cattgacgga tctatccctc ccactcaggt gtcctctcac   1740
gttatgaccg ttttctacgg tatggccttg cggatcgccg aatccgtcct tgaagactat   1800
gccaagaaag cttaaa                                                   1816
```

# FIG. 2

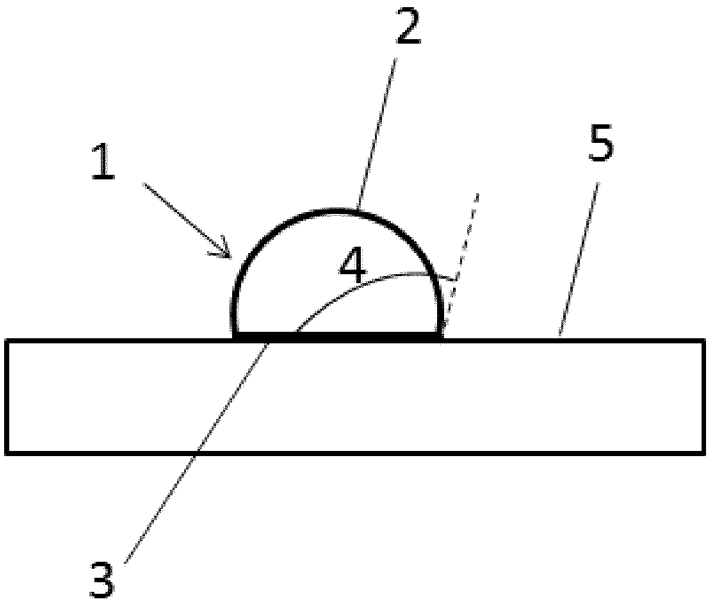


FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2007014891 A
- US 2006078650 A
- US 4567046 A
- EP 426211 A
- JP 60078529 A
- JP 62111629 A
- JP 63258528 A
- WO 2010121933 A
- WO 2012001169 A
- WO 2014013074 A
- WO 2013007820 A
- WO 2013007821 A


### Non-patent literature cited in the description


- **M. E. STEFFOLANI et al.** *Food and Bioprocess Technology,* vol. 5 (6), 2242-2255
- **NEEDLEMAN, S. B. ; WUNSCH, C. D.** *J. Mol. Biol.,* 1970, vol. 48, 443-453
- **RICE,P. ; LONGDEN,I. ; BLEASBY,A.** EMBOSS: The European Molecular Biology Open Software Suite. *Trends in Genetics,* 2000, vol. 16 (6), 276-277, http://emboss.bioinformatics.nl
- **ALTSCHUL et al.** *J. Mol. Biol.,* 1990, vol. 215, 403-10
- **ALTSCHUL et al.** *Nucleic Acids Res.,* 1997, vol. 25 (17), 3389-3402
- **HAWKSWORTH et al.** Ainsworth and Bisby's Dictionary of The Fungi. CAB International, University Press, 1995
- **SAMBROOK et al.** Molecular Cloning: A Laboratory Manual. Cold Spring Harbor Laboratory Press, 1989
- **WITTEVEEN et al.** Glucose oxidase overproducing and negative mutants of Aspergillus niger. *Appl. Microbiol. Biotechnol,* 1990, vol. 33, 683-686